Europäisches Patentamt

European Patent Office

Office européen des brevets

(11) Numéro de publication: **0 421 869 A1**

## DEMANDE DE BREVET EUROPEEN

(21) Numéro de dépôt: 90402726.5

(51) Int. Cl.⁵: **G01T 1/29, G01T 1/24**

(22) Date de dépôt: 02.10.90

(30) Priorité: 04.10.89 FR 8912984

(43) Date de publication de la demande:
10.04.91 Bulletin 91/15

(84) Etats contractants désignés:
DE ES GB IT NL SE

(71) Demandeur: **COMMISSARIAT A L'ENERGIE
ATOMIQUE Etablissement de Caractère
Scientifique Technique et Industriel
31/33, rue de la Fédération
F-75015 Paris(FR)**

(72) Inventeur: **Lemercier, Pierre
15 rue du 16 Août 1944
F-38950 Saint Martin Le Vinoux(FR)**
Inventeur: **Poujois, Robert
Les Jaillets
F-38650 Sinard(FR)**

(74) Mandataire: **Mongrédien, André et al
c/o BREVATOME 25, rue de Ponthieu
F-75008 Paris(FR)**

(54) **Dispositif matriciel de grandes dimensions pour la prise ou la restitution d'images.**

(57) Dispositif matriciel de prise ou de restitution d'images comprenant plusieurs matrices actives de prise ou de restitution d'images ; chacune de ces matrices actives comporte une zone sensible (10) formée d'éléments sensibles (12) aptes à détecter ou émettre un rayonnement. Ces éléments (12) sont reliés à des lignes (14) et des colonnes (16) conductrices connectés à des circuits d'adressage (22, 24). Les matrices actives sont agencées de manière à rendre jointives les zones sensibles (10) des matrices actives voisines.

Application à la détection de rayonnements non focalisables et à l'affichage en grandes dimensions.

FIG. 2A

# DISPOSITIF MATRICIEL DE GRANDES DIMENSIONS POUR LA PRISE OU LA RESTITUTION D'IMAGES

L'invention a trait à un dispositif matriciel de grandes dimensions pour la prise ou la restitution d'images. Elle s'applique notamment à la détection de rayonnements non focalisables (rayons X, gamma) utiles dans le domaine médical par exemple mais aussi à la réalisation d'écrans de visualisation.

Les détecteurs ou les écrans du type à "matrice active" présentent des fonctionnements similaires : un détecteur présente une surface sensible adaptée à un rayonnement déterminé (infrarouge, visible, X ou gamma ...) qui est constituée par un ensemble de pixels comprenant respectivement un élément sensible par exemple une photodiode. Les pixels sont ordonnés suivant des lignes et des colonnes et connectés à des circuits micro-électroniques par des lignes et des colonnes conductrices. Sous l'effet d'un rayonnement incident les éléments sensibles délivrent des signaux électriques transformés en signal vidéo par les circuits micro-électroniques.

Un écran reçoit un signal vidéo sur des entrées de circuits micro-électroniques qui le transforment en signaux électriques appliqués aux pixels de l'écran par l'intermédiaire de lignes et de colonnes conductrices. Les pixels de l'écran arrangés en lignes et en colonnes comprennent des éléments sensibles (à cristaux liquides par exemple) dont la propriété optique est modifiée sous l'effet du signal électrique qui leur est appliqué pour permettre la visualisation d'une information.

Dans les deux cas, détecteur ou écran, les circuits micro-électroniques servant à adresser les pixels seront notés circuits d'adressage dans la suite du texte.

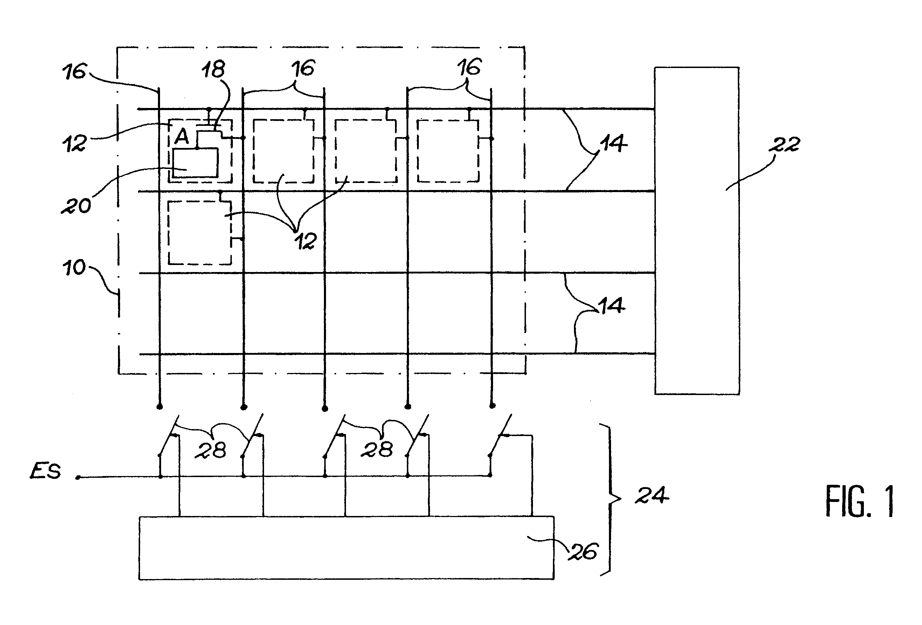

La figure 1 représente une matrice active qui peut être, selon la nature des éléments sensibles, un détecteur ou un écran. Dans un souci de simplification, cette matrice ne comporte que 12 pixels. D'autre part, la description qui suit, ayant pour but l'introduction des éléments principaux d'une matrice active et faisant référence à un dispositif connu par ailleurs, est volontairement sommaire.

La matrice active est composée d'une zone sensible 10 comportant des pixels 12 connectés à des lignes 14 et des colonnes 16 conductrices. Les pixels 12 sont placés aux intersections des lignes et colonnes conductrices de la matrice active.

Chaque pixel 12 comprend un interrupteur commandable réalisé par exemple par un transistor 18 connecté à une ligne conductrice et une colonne conductrice. La connexion A relie le transistor 18 à l'élément sensible 20 du pixel.

Cet élément sensible 20 peut occuper, comme représenté figure 1, une partie de la surface du pixel lorsqu'il est réalisé dans le même substrat que l'interrupteur qui lui est associé ou la totalité du pixel lorsque l'élément sensible est réalisé à partir d'une couche distincte de celle des interrupteurs. Dans ce dernier cas, les éléments sensibles sont disposés au-dessus des interrupteurs et des conducteurs lignes et colonnes.

Les transistors 18 sont adressés séquentiellement, ligne à ligne par l'intermédiaire d'un circuit d'adressage des lignes 22 et d'un circuit d'adressage des colonnes 24.

Le circuit d'adressage des lignes 22 sélectionne les lignes successivement en portant les transistors à un potentiel déterminé permettant de rendre les transistors conducteurs.

Le circuit d'adressage des colonnes 24 pendant le temps de sélection d'une ligne, relie successivement à la sortie ES du détecteur (respectivement l'entrée de l'écran) les transistors 18 de cette ligne, en fermant des interrupteurs 28 grâce à un circuit de commande 26 relié à ces interrupteurs. Le signal électrique délivré (ou reçu) par l'élément sensible sélectionné est reçu (ou délivré) par le point ES relié aux interrupteurs 28.

Le circuit d'adressage des colonnes 24 peut aussi commander simultanément les transistors 18 d'une ligne adressée. Dans ce cas, le circuit d'adressage est rélié directement aux colonnes et au point ES et comprend une mémoire.

Les circuits d'adressage 22, 24 intégrés à la matrice active, occupent une bande de 100 à 200 microns de large sur les bords de la matrice.

Dans certains cas, ceux-ci sont externes ; les lignes et les colonnes se terminent par des connexions occupant une bande d'environ 100 microns sur les bords de la matrice.

Les dimensions de telles matrices vont de 1,5 x 1,5 cm² pour les plus petites à 20 x 30 cm² pour les plus grandes. Un effort constant est fait pour augmenter ces dimensions, notamment pour la détection de rayonnement non focalisables X ou gamma où la surface sensible doit au moins avoir la taille de l'objet à détecter. Il est aussi avantageux de disposer d'écrans à matrice active de grandes dimensions pour la restitution d'images avec une bonne résolution.

L'augmentation de ces dimensions pose de sérieux problèmes : mise en oeuvre difficile nécessitant des matériaux de grande pureté, utilisation de salles blanches ultra propres, mauvais rendement dans la production de grandes matrices et donc coûts importants.

La présente invention permet la réalisation de détecteurs ou d'écrans matriciels de grandes dimensions. Réalisés à partir d'un assemblage de matrices actives, ces détecteurs ou ces écrans peuvent être d'autant plus importants que les dimensions des matrices actives utilisées sont importantes.

De façon plus précise, la présente invention concerne un dispositif matriciel de prise ou de restitution d'images comprenant plusieurs matrices actives de prise ou de restitution d'images, chaque matrice active comportant une zone sensible comprenant des éléments sensibles aptes à détecter un rayonnement pour visualiser une information, reliés à des lignes et des colonnes conductrices, et des circuits d'adressage des lignes et des colonnes, les matrices actives étant agencées de manière à rendre jointives les zones sensibles des matrices actives voisines.

Les circuits d'adressage occupant au plus deux côtés de chaque matrice active, la zone sensible bordant les autres côtés, chaque côté d'une matrice active occupé par des circuits d'adressage est recouvert par la zone sensible d'une matrice active voisine.

De manière avantageuse, pour chaque matrice active, les bords formés par la zone sensible et qui recouvrent les bords de matrices actives voisines sont chanfreinés. On évite ainsi des espaces aveugles sur les zones sensibles dus à l'épaisseur des matrices se chevauchant.

Selon une variante de réalisation d'un dispositif conforme à l'invention, les circuits d'adressage n'occupant qu'un seul côté de chaque matrice active, au moins une partie des circuits d'adressage des lignes ou des colonnes est incluse dans la zone sensible.

Selon une autre variante de réalisation d'un dispositif conforme à l'invention, les circuits d'adressage n'occupant qu'un seul côté de chaque matrice active, les lignes conductrices (ou les colonnes conductrices) sont reliées aux circuits d'adressage par des connexions parallèles aux colonnes conductrices (ou aux lignes conductrices).

De manière avantageuse, dans le cas d'un dispositif matriciel de prise d'images, les zones des matrices actives occupées par les circuits d'adressage sont recouvertes d'un blindage protecteur.

Les caractéristiques et avantages de l'invention apparaîtront mieux après la description qui suit donnée à titre explicatif et nullement limitatif. Cette description se réfère à des dessins annexés, sur lesquels :

- la figure 1, déjà décrite et faisant référence à l'art antérieur, représente schématiquement une matrice active ;
- les figures 2A et 2B représentent schématiquement une vue partielle (2A) et une vue générale (2B) de deux variantes de réalisation d'un dispositif conforme à l'invention et la figure 2C une coupe de la figure 2A dans le cas de l'utilisation de chanfreins ;
- les figures 3A et 3B représentent schématiquement deux vues partielles de deux autres variantes de réalisation d'un dispositif conforme à l'invention ;
- les figures 4A, 4B et 4C représentent schématiquement trois modes de réalisation d'une matrice active pour son utilisation dans un dispositif conforme à l'invention.

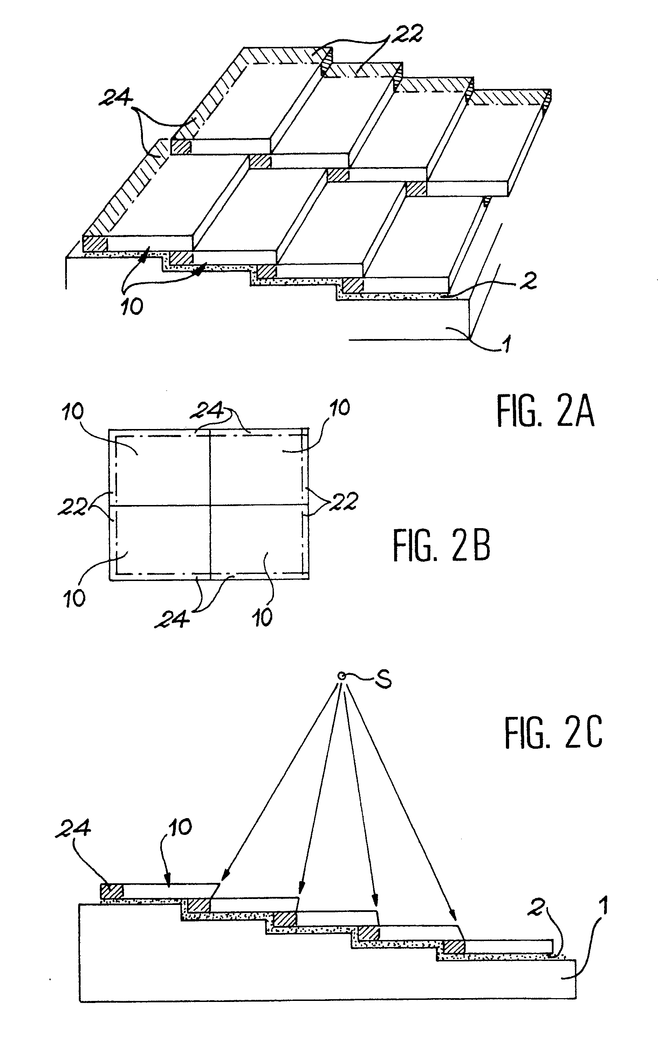

Un dispositif matriciel de prise ou de restitution d'images conforme à l'invention comprend plusieurs matrices actives. La figure 2A représente une vue partielle d'un tel dispositif. Dans cet exemple de réalisation, les circuits d'adressage 22, 24 des lignes et des colonnes sont disposés, pour chaque matrice active, sur deux bords perpendiculaires entre eux et forment des zones mortes pour la détection ou l'affichage (ces zones mortes sont hachurées sur la figure). Les matrices actives sont découpées de manière à ce que leur zone sensible 10 occupe l'espace restant.

Dans cette réalisation, les matrices actives sont agencées par exemple, de façon à ce que sur chaque ligne, chaque matrice active chevauche la zone morte correspondant au circuit 24 de sa voisine de droite de la même ligne et la zone morte correspondant au circuit 22 de sa voisine de la ligne suivante. Par ailleurs, pour éviter des surépaisseurs, les matrices actives d'une ligne chevauchent les matrices actives de la ligne suivante avec un décalage correspondant à la largeur de la zone morte associée au circuit 24.

Les matrices actives sont empilées les unes sur les autres de manière à ce que les zones mortes de chacune d'elles soient placées sous les zones sensibles des matrices actives voisines. Les zones sensibles de matrices actives sont donc jointives et le dispositif matriciel présente une face sensible continue alors que son autre face permet le raccordement des circuits d'adressage à un circuit de commande extérieur.

Les matrices actives du dispositif matriciel sont collées par un film de colle 2 sur la face supérieure d'un support 1 qui est adapté à la forme du dispositif.

De façon avantageuse, comme représenté sur la figure 2C, dans le cas d'un dispositif de prise d'images, les bords formés par la zone sensible de chaque matrice active sont chanfreinés suivant l'angle d'incidence de la source de rayonnements S pour éviter les pertes de rayonnements incidents et les effets d'ombre d'une zone sensible sur une autre zone sensible.

La figure 2B représente schématiquement une vue générale d'une variante de réalisation d'un dispositif conforme à l'invention comprenant des matrices actives ayant deux bords occupés par les circuits d'adressage 22, 24.

Le dispositif matriciel est ici réalisé par la juxtaposition des zones sensibles 10 de quatre matrices actives. Les matrices actives ne se chevauchent pas, on peut donc éviter de chanfreiner les bords des zones sensibles 10. Les circuits d'adressage des lignes et des colonnes 22, 24 forment un cadre inactif autour des zones sensibles.

Dans ce cas, les matrices actives sont rendues solidaires par collage sur un support plan.

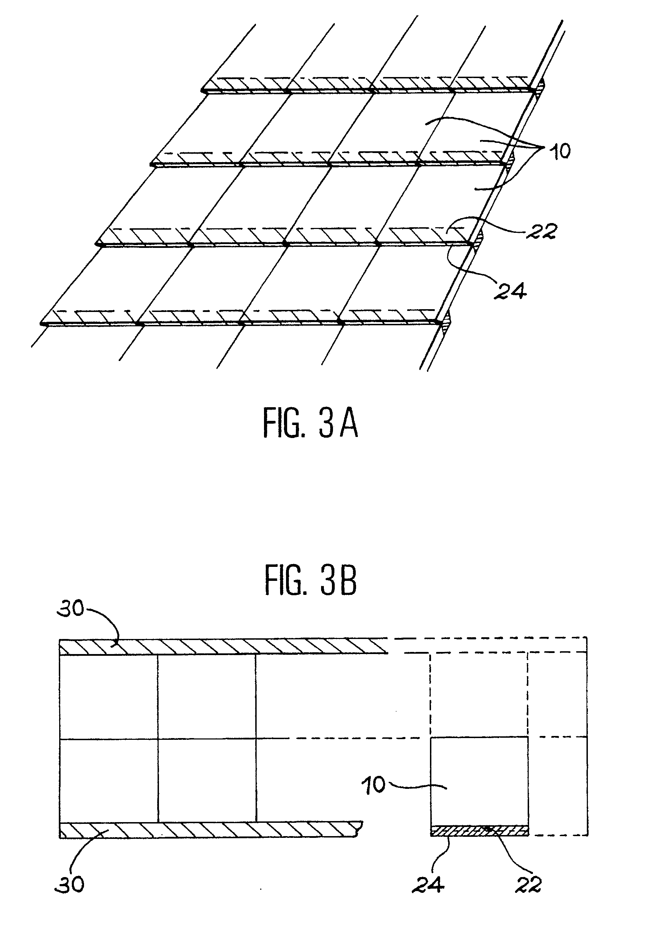

La figure 3A représente schématiquement une variante de réalisation d'un dispositif conforme à l'invention. Les matrices actives sont accolées les unes aux autres pour former des lignes. Les circuits d'adressage 22, 24 sont réunis sur un seul et même bord pour toutes les matrices d'une ligne formant ainsi une bande inactive représentée par des hachures sur la figure. Les zones sensibles 10 des matrices actives formant une ligne recouvrent la bande constituée par les circuits d'adressage 22, 24 de la ligne suivante. Ainsi, les zones sensibles 10 sont jointives et forment une face du dispositif matriciel. Son autre face permet le raccordement des circuits d'adressage à un circuit de commande extérieur.

De même que pour la réalisation représentée sur la figure 2C, les bords des zones sensibles 10 qui chevauchent une zone morte peuvent être chanfreinés de manière à éviter la formation d'ombre ou les pertes de rayonnement.

La figure 3B représente schématiquement une autre variante de réalisation d'un dispositif conforme à l'invention constitué par des matrices actives ayant leurs circuits d'adressage 22, 24 réunis sur un seul côté.

Les matrices actives sont accolées les unes aux autres sur deux lignes jointives mais ne se chevauchant pas, les circuits d'adressage formant deux bandes sur les bords extérieurs du dispositif matriciel.

Dans le cas où le dispositif matriciel est apte à la réception d'images (détecteur) les circuits d'adressage 22, 24 peuvent être protégés par un blindage 30 composé par exemple de plomb. Bien entendu, ce blindage peut être effectué sur chacun des dispositifs précédemment décrit.

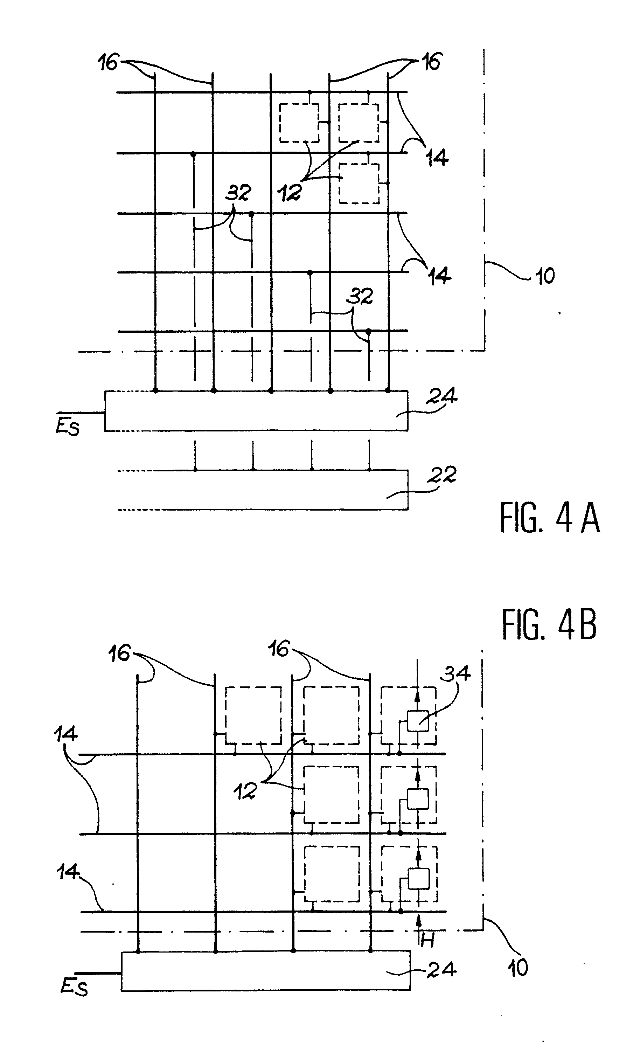

La figure 4A représente schématiquement un premier mode de réalisation d'une matrice active ayant ses circuits d'adressage disposés sur un seul côté.

Les circuits d'adressage 22, 24 des lignes 14 et des colonnes 16 conductrices occupent une bande d'environ 200 à 400 microns sur un côté de la matrice active.

Le câblage des colonnes conductrices 16 est usuel ; les lignes conductrices 14 sont reliées au circuit d'adressage 22 par des connexions 32 parallèles aux colonnes conductrices. De la même façon, on aurait pu connecter les colonnes au circuit 24 par des connexions parallèles aux lignes, le câblage des lignes étant alors usuel.

La figure 4B représente schématiquement un second mode de réalisation d'une matrice active ayant ses circuits d'adressage disposés sur un seul côté.

En fait, dans cette réalisation, seul le circuit d'adressage 24 des colonnes conductrices 16 borde la zone sensible 10 sur une bande d'environ 100 à 200 microns. Le circuit d'adressage des lignes 14 conductrices est inclus dans la zone sensible 10 ; chaque étage 34 du registre à décalage formant le circuit d'adressage des lignes partage l'espace des pixels 12 formant une colonne extrême de la matrice active.

Un signal d'horloge H est appliqué sur ces étages 34 qui sont reliés entre eux en série de manière à adresser successivement les lignes conductrices 14.

On peut aussi réaliser une matrice active avec le circuit d'adressage 22 qui borde la zone sensible et le circuit d'adressage 24 inclus dans les pixels d'une ligne extrême, par l'intermédiaire de registres à décalage.

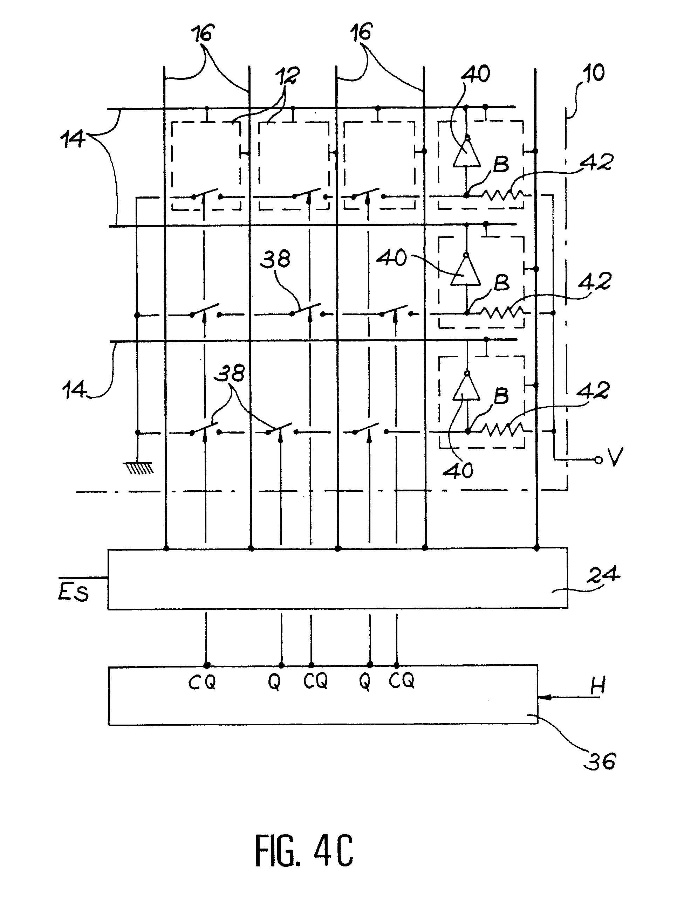

La figure 4C représente schématiquement un troisième mode de réalisation d'une matrice active ayant ses circuits d'adressage disposés sur un seul côté.

Cette réalisation utilise un compteur 36 et un système de décodage pour remplacer le registre à décalage du circuit d'adressage des lignes conductrices.

Le compteur 36 est aligné sur le circuit d'adressage 24 des colonnes pour former avec celui-ci une bande d'environ 400 microns. Il est alimenté par un signal d'horloge H et délivre des signaux de comptage sur des sorties Q et des sorties complémentaires CQ. Ces signaux de comptage commandent l'ouverture ou la fermeture d'interrupteurs 38 réalisés par des transistors qui font office de système de décodage et qui sont inclus dans les pixels : chaque nouvelle impulsion d'horloge commande la fermeture des transistors 38 associés à une ligne conductrice 14 différente.

Les transistors 38 associés à une ligne conductrice 14 sont reliés en série entre eux et en un point B avec un inverseur 40 connecté à cette ligne et faisant office d'adaptateur de sortie. Ce point B est par ailleurs connecté à une résistance de charge 42 portée à un potentiel d'alimentation V.

Les inverseurs 40, les interrupteurs 38 et les résistances de charge 42 sont inclus dans la zone sensible 10 de la matrice active et plus particulièrement dans les pixels de la matrice.

Quelle que soit la variante de réalisation adoptée pour la réalisation des matrices actives, l'invention permet l'obtention d'un dispositif matriciel de prise ou de restitution d'images de grandes dimensions simple à fabriquer et à mettre en oeuvre.

## Revendications

1. Dispositif matriciel de prise ou de restitution d'images, caractérisé en ce qu'il comprend plusieurs matrices actives de prise ou de restitution d'images, chaque matrice active comportant une zone sensible (10) comprenant des éléments sensibles aptes à détecter un rayonnement ou visualiser une information reliés à des lignes (14) et des colonnes (16) conductrices, et des circuits d'adressage (22, 24) des lignes et des colonnes, les matrices actives étant agencées de manière à rendre jointives les zones sensibles (10) des matrices actives voisines.

2. Dispositif selon la revendication 1, caractérisé en ce que les circuits d'adressage (22, 24) occupant au plus deux côtés de chaque matrice active, la zone sensible (10) bordant les autres côtés, chaque côté d'une matrice active occupé par des circuits d'adressage (22, 24) est recouvert par la zone sensible (10) d'une matrice active voisine.

3. Dispositif selon la revendication 2, caractérisé en ce que pour chaque matrice active, les bords formés par la zone sensible (10) et qui recouvrent les bords des matrices actives voisines sont chanfreinés.

4. Dispositif selon la revendication 1, caractérisé en ce que les circuits d'adressage (22, 24) n'occupant qu'un seul côté de chaque matrice active, au moins une partie des circuits d'adressage (22, 24) des lignes ou des colonnes est incluse dans la zone sensible (10).

5. Dispositif selon la revendication 1, caractérisé en ce que les circuits d'adressage (22, 24) n'occupant qu'un seul côté de chaque matrice active, les lignes conductrices (14) (ou les colonnes conductrices (16)) sont reliées aux circuits d'adressage (22 ou 24) par des connexions parallèles aux colonnes conductrices (16) (ou aux lignes conductrices (14)).

6. Dispositif selon la revendication 1, caractérisé en ce que, dans le cas d'un dispositif matriciel de prise d'images, les zones des matrices actives occupées par les circuits d'adressage (22, 24) sont recouvertes d'un blindage (30).

FIG. 1

FIG. 2A

FIG. 2B

FIG. 2C

FIG. 3 A

FIG. 3 B

FIG. 4 A

FIG. 4 B

FIG. 4 C

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 291 351 (SHIMADZU CORP.)<br>* Figures; colonne 1, lignes 7-63; colonne 3, ligne 18 - colonne 4, ligne 40 *<br>– – – | 1,2,5 | G 01 T 1/29<br>G 01 T 1/24 |
| Y | | 4 | |
| Y | NUCLEAR INSTRUMENTS & METHODS IN PHYSICS RESEARCH, vol. A-234, no. 2, 1 février 1985, pages 398-400, Elsevier Science Publishers B.V., Amsterdam, NL; W.R.Th. TEN KATE: "Capacitive multiplexing on a silicon microstrip detector"<br>– – – | 4 | |
| A | EP-A-0 138 647 (DIGITAL IMAGING CO. OF AMERICA)<br>* Figures; pages 7-9; page 11, ligne 8 - page 19, ligne 14; page 21, ligne 13 - page 23, ligne 22; page 28, ligne 19 - page 31, ligne 24 *<br>– – – | 1,2,4,5 | |
| A | EP-A-0 239 808 (K.K. TOSHIBA)<br>* Figures 10,14; page 17, ligne 34 - page 19, ligne 6; page 24, ligne 9 - page 26, ligne 20 *<br>– – – | 1,2,4,5 | |
| A | IEEE TRANSACTIONS ON NUCLEAR SCIENCE, vol. 35, no. 1, février 1988, pages 171-175, IEEE, New York, US; S.A. KLEINFELDER et al.: "A flexible 128 channel silicon strip detector instrumentation integrated circuit with sparse data readout"<br>– – – – – | 1,2,4,5 | **DOMAINES TECHNIQUES RECHERCHES (Int. Cl.5)**<br><br>G 01 T 1/00 |

Le présent rapport de recherche a été établi pour toutes les revendications

| Lieu de la recherche | Date d'achèvement de la recherche | Examinateur |
|---|---|---|
| La Haye | 22 janvier 91 | BROCK T.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
...........................................................
& : membre de la même famille, document correspondant